# EUROPEAN PATENT SPECIFICATION

(11) **EP 1 533 343 B1**
(45) Date of publication and mention of the grant of the patent: **26.07.2006**
(21) Application number: 04026724.7
(22) Date of filing: 10.11.2004
(51) Int. Cl.: C08L 77/00, C08K 5/3492, C08K 5/20, C08K 5/00

(54) **Flame-retardant polyamide resin composition**
Flammgeschützte Polyamidharzzusammensetzung
Composition à base de résine polyamide ignifuge

(30) Priority: 20.11.2003 JP 2003390999
(43) Date of publication of application: 25.05.2005
(73) Proprietor: MITSUBISHI ENGINEERING-PLASTICS CORPORATION, Tokyo (JP)
(72) Inventor: Ohyama, Hajime, Hiratsuka-shi Kanagawa-ken (JP); Matsui, Hiromichi, Hiratsuka-shi Kanagawa-ken (JP); Maeda, Naoya, Hiratsuka-shi Kanagawa-ken (JP)
(74) Representative: HOFFMANN EITLE

(56) References cited:
- US-A- 5 637 632
- US-A- 5 756 571
- US-A1- 2002 151 625

## Description

The present invention relates to a flame-retardant polyamide resin composition, more particularly to the said resin composition which is capable of providing the products with high electrical safety.

Connectors as an electrical and electronic part are widely used as a device for connecting the electrical apparatus with each other or the electrical and electronic circuits in the apparatus, or as a part of various industrial products such as household appliances, communications equipment, OA apparatus, computers, electronic devices for automobiles, etc., and thus they are indispensable in the field of electrical and electronic products. Flame-retardant polyamide resin compositions are popularly used as a material for producing such connectors. Recently, however, in order to secure higher electrical safety in the diversified uses of such compositions, the glow wire ignition temperature in the IEC 60695-2-13 Standards (the threshold temperature that can pass this Standards test, this temperature being hereinafter referred to simply as glow wire ignition temperature) has been revised from "725°C or above" to "775°C or above". Consequently, it turned out that the flame-retardant polyamide resin compositions which have been generally used as a connector material cannot meet the requirement of the revised glow wire ignition temperature.

Representative of the commonly known flame-retardant connector materials are the polyamide resin compositions comprising polyamide resins and melamine cyanurate (see, for example, Japanese Patent Application Laid-Open (KOKAI) Nos. 5-17683, 9-143365, 11-12461, 11-12462 and 11-26060). The polyamide resin compositions disclosed in these publications shows satisfactory flame retardancy and are free from such problems as plate-out and blooming. However, in the descriptions of the polyamide resin compositions in these publications, there is no information for the glow wire ignition temperature.

These polyamide resin compositions disclosed in the above publications also had the problem that when the content of melamine cyanurate as a flame retardant in the compositions is increased to meet the requirement of the revised glow wire ignition temperature, the compositions are deteriorated in molding properties and mechanical strength.

### SUMMARY OF THE INVENTION

Accordingly, an object of the present invention is to provide a flame-retardant polyamide resin composition which has no likelihood of causing such troubles as plate-out and blooming, excels in molding properties and mechanical strength, is not lower than 775°C in its glow wire ignition temperature, and can provide the products that can measure up to the revised standard. As a result of the present inventors' strenuous studies to attain the above object, it has been found that the above-said standard can be met while maintaining excellent molding properties and mechanical strength when a triazine-based flame retardant is used, in an amount greater than ordinary usage, with a specific polyamide resin in combination with a carboxylic acid amide-based wax. The present invention has been attained on the basis of the above finding.

In a first aspect of the present invention, there is provided a flame-retardant polyamide resin composition comprising 100 parts by weight of a polyamide resin having a viscosity number of 85 to 140, 21 to 35 parts by weight of a triazine-based flame retardant, and 0.01 to 0.3 parts by weight of a carboxylic acid amide-based wax.

In a second aspect of the present invention, there is provided a connector made by molding the above flame-retardant polyamide resin composition.

### DETAILED DESCRIPTION OF THE INVENTION

A detailed description of the present invention is given below. The polyamide resin used as the base material of the flame-retardant polyamide resin composition according to the present invention is a polyamide obtained by polycondensing a 3- or more-membered ring lactam, a polymerizable ω-amino acid or a dibasic acid with a diamine or the like. Specifically, such polyamides include the polymers of ε-captrolactam, aminocaproic acid, enantholactam, 7-aminoheptanoic acid, 11-aminoundecanoic acid, 9-aminononanoic acid, α-pyrrolidone, α-piperidone, etc., and the polymers obtained by polycondensing diamines such as hexamethylenediamine, nonamethylenediamine, undecamethylenediamine, dodecamethylenediamine, metaxylylenediamine, etc., and dicarboxylic acids such as terephthalic acid, isophthalic acid, adipic acid, sebacic acid, dodecanoic dibasic acid, glutaric acid, etc., and copolymers thereof.

More specifically, as examples of such polyamide resins, polyamides 4, 6, 7, 8, 11, 12, 6 - 6, 6 · 9, 6 · 7.0, 6 · 11, 6 · 12, 6T, 6/6 · 6, 6/12, 6/6T, 6T/6I and MXD6 can be mentioned. Mixtures of two or more of these polyamide resins can be used. Among these polyamide resins, polyamide 6, copolymer polyamides 6/6 · 6, and/or polyamide 6 · 6 axe especially preferred in view of flame retardancy, mechanical strength and molding properties of the obtained composition. These polyamide resins may be terminated in their molecular chain with a carboxylic acid or an amine which can also serve for the adjustment of molecular weight.

The polyamide resins in the present invention have a polymerization degree (or molecular weight) falling in a specified range, that is, they have a viscosity number in a specified range. The viscosity number of polyamide resin, as measured according to JIS K6933-1999 using 96% sulfuric acid in a concentration of 5 mg/ml at 23°C, should be in the range of 85 to 140, preferably 90 to 135, more preferably 95 to 130. when the viscosity number is smaller than 85, the composition becomes hard to mold because of low melt viscosity and also lowers in mechanical strength. When the viscosity number exceeds 140, the composition proves unsatisfactory in melt fluidity for use as an injection molding material and also becomes hardly capable of attaining flame retardancy of the level V-0 in the UL94 Standards. As the polyamide resins, there can be used a mixture a polyamide resin(s) having a high viscosity number and a polyamide resin(s) having a low viscosity number so that the viscosity number of the blend will fall within the range specified in the present invention.

A triazine-based flame retardant is blended in the flame-retardant polyamide resin composition of the present invention. The triazine-based flame retardants usable in the present invention include, for example, the compounds represented by the following formulae (1) and (2), melamines and melamine cyanurate: 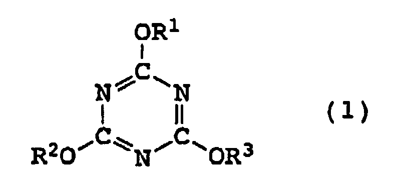 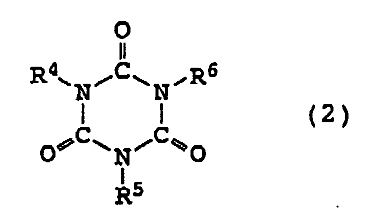 wherein R¹ to R⁶ represent respectively a hydrogen atom or an alkyl group. The carbon number of the alkyl group is preferably 1 to 5, more preferably 1 to 3.

Examples of the compounds represented by the formula (1) include cyanuric acid, trimethyl cyanurate, triethyl cyanurate, tri(n-propyl) cyanurate, methyl cyanurate and diethyl cyanurate. Examples of the compounds represented by the formula (2) include isocyanuric acid, trimethyl isocyanurate, triethyl isocyanurate, tri(n-propyl) isocyanurate, diethyl isocyanurate and methyl isocyanurate.

The melamines usable in the present invention include melamine, melamine derivatives, the compounds having a structure analogous to melamine, and melamine condensates. The more specific examples of such melamines are melamine, ammelide, ammeline, formoguanamine, guanylmelamine, cyanomelamine, arylguanamine, melam, melem and mellon.

As melamine cyanurate, an equimolar reaction product of cyanuric acid and melamine can be mentioned. Some of the amino groups or hydroxyl groups in melamine cyanurate may be replaced by other substituent groups. Melamine cyanurate can be obtained, for example, by mixing an aqueous solution of cyanuric acid and an aqueous solution of melamine, reacting the mixture with stirring at a temperature in the range of 90 to 100°C, and filtering the produced precipitate. Melamine cyanurate is a white solid, which is preferably used in the form of fine powder. It is of course possible to use a commercial product, either in the form as it is or after pulverization.

As the triazine-based flame retardant, cyanuric acid, isocyanuric acid, melamine, melamine cyanurate, melem cyanurate and the like can be mentioned. Equimolar reaction products of cyanurates (such as malamine cyanurate) and melamines are especially preferred in view of having no possibility of causing blooming which is exudation of the decomposed material on the surface of the molded product.

The amount of the triazine-based flame retardant to be blended should be defined within the range of 21 to 35 parts by weight to 100 parts by weight of the polyamide resin. When the amount of the triazine-based flame retardant blended is less than 21 parts by weight, the glow wire ignition temperature of the composition defined by the IEC60695-2-13 Standards falls short of 775°C. When the amount of the said flame retardant blended exceeds 35 parts by weight, in the flame retardancy test according to the UL94 Standards, the liquid droplets may fall without being perfectly extinguished during dripping to cause cotton ignition, which leads to a drop of flame retardancy and mechanical strength and makes it impossible to maintain the properties characteristic of the injection molded products such as connector. In view of the balance of flame retardancy, glow wire ignition temperature and mechanical properties of the composition, the amount of the said flame retardant to be blended is preferably 22 to 33 parts by weight, more preferably 24 to 30 parts by weight.

Blending of a triazine-based flame retardant in a polyamide resin can be accomplished by various known methods at any stage in the process up to the stage just before molding of the objective product. For instance, the following methods can be used: (1) The respective component materials are weighed out to the predetermined ratios and mixed by a blender, and the blend is melt kneaded by a single- or double-screw extruder and pelletized; (2) There are prepared in advance the master pellets having a triazine-based flame retardant incorporated in a larger amount than the predetermined quantity in a polyamide resin, and these master pellets are dry blended with a diluting polyamide resin. Melt kneading is preferably carried out so that the resin temperature will not exceed 290°C. When the resin temperature exceeds 290°C, the flame retardant is decomposed and consequently the glow wire ignition temperature of the product according to the present invention fails to reach 775°C.

A carboxylic acid amide-based wax is blended in the flame-retardant polyamide resin composition according to the present invention. This type of wax, combined with the triazine-based flame retardant blended in the polyamide resin composition, works for enhancing flame retardancy and improving molding properties (such as releasability) and mechanical strength of the product. Such a carboxylic acid amide-based wax can be obtained from a dehydration reaction of a diamine and a mixture of a higher aliphatic monocarboxylic acid and a polybasic acid.

As the higher aliphatic monocarboxylic acid used in the present invention, there are exemplified the saturated aliphatic monocarboxylic acids and hydroxycarboxylic acids with a carbon number of not less than 16 such as palmitic acid, stearic acid, behenic acid, montanic acid and 12-hydroxystearic acid. As the polybasic acid, there are exemplified di- or higher basic carboxylic acids, for example, aliphatic dicarboxylic acids such as malonic acid, succinic acid, adipic acid, sebacic acid, pimelic acid and azelaic acid, aromatic dicarboxylic acids such as phthalic acid and terephthalic acid, and alicyclic dicarboxylic acids such as cyclohexanedicarboxylic acid and cyclohexylsuccinic acid. A the diamines used in the present invention include, for example, ethylenediamine, 1,3-diaminopropane, 1,4-diaminobutane, hexamethylenediamine, metaxylenediamine, tolylenediamine, paraxylenediamine, phenylenediamine and isophoronediamine.

As the carboxylic acid amide-based wax, the one obtained by polycondensing stearic acid, sebacic acid and ethylenediamine is preferred, and the one obtained by reacting and polycondensing 2 moles of stearic acid, one mole of sebacic acid and 2 moles of ethylenediamine is the especially preferred.

The said wax is blended in an amount of 0.01 to 0.3 parts by weight to 100 parts by weight of the polyamide resin. When the amount of the said wax blended is less than 0.01 part by weight, the improvement of molding properties is insufficient. When the wax amount exceeds 0.3 parts by weight, flame retardancy lowers and there tends to take place troubles such as plate-out and blooming. The preferred range of the amount of the wax to be blended is 0.05 to 0.15 part by weight. Blending of a carboxylic acid amide-based wax improves release properties of the product and enhances its productivity when injection molding a product such as connector, without impairing flame retardancy and glow wire ignition temperature properties of the resin composition.

In the flame-retardant polyamide resin composition of the present invention, it is possible to blend other types of flame retardant than the triazine-based ones, pigment, dye, filler, nucleating agent, foaming agent, release agent, thermal stabilizer, light stabilizer, antistatic agent, anticorrosive, and other various known additives for resin, within limits not affecting the composition to make it unable to meet the required level of flame retardancy (in the UL-94 Standards) and the glow wire ignition temperature standard. For producing the desired molded product such as connector using the flame-retardant polyamide resin composition of the present invention, the said dry blend or pelletized polyamide resin composition is melted and molded by a known molding method such as injection molding or extrusion molding.

The flame-retardant polyamide resin composition and connectors according to the present invention can produce the particularly advantageous practical effects such as mentioned below, and their industrial utilization value is very high.
1. The flame-retardant polyamide resin composition according to the present invention excels in flame retardancy. Particularly, its 3 mm thick test piece shows a glow wire ignition temperature of not lower than 775°C, which meets the requirement of the revised IEC60695-2-13 Standards.
2. The flame-retardant polyamide resin composition according to the present invention excels in flame retardancy. Particularly, its 0.8 mm thick test piece shows flame retardancy of the level V-0 in the UL-94 Standards.
3. The flame-retardant polyamide resin composition according to the present invention is free from such troubles as plate-out and blooming, so that it can provide the products with good appearance.
4. The flame-retardant polyamide resin composition according to the present invention excels in flame retardancy as well as in molding properties (release properties of the molded product), so that the productivity in the production of the molded products using this composition is high.
5. The connectors according to the present invention excel in flame retardancy and electrical safety and are useful as a device for connecting electrical and electronic circuits between or in the electrical apparatus.

The flame-retardant polyamide resin composition according to the present invention, as explained in detail above, is useful as a material for connectors used widely as a device for connecting electrical and electronic circuits between the electrical apparatus or in the electrical apparatus and as a part of household appliances, communication equipment, OA apparatus, computers, electronic devices for automobiles, etc. The connectors provided by the present invention are of a structure that allows insertion of a plurality of electrical wires or cables into the connectors, and the connectors having the electrical wires or cables inserted therein can be used for fixing the electrical wires or cables in position by, for instance, making use of the system of fits.

### EXAMPLES

The present invention is explained in further detail hereinbelow with reference to the examples thereof, which examples, however, are merely intended to be illustrative and not to be construed as limiting the scope of the invention. The properties of the respective component materials used in the following Examples are as described below. The evaluation tests on the resin compositions comprising these component materials and the products obtained therefrom were conducted by the methods described below.

### Materials used:

(A-1) PA6: Polyamide 6 with a viscosity number of 100
(A-2) PA6: Polyamide 6 with a viscosity number of 120
(A-3) PA6: Polyamide 6 with a viscosity number of 150
(A-4) PA66: Polyamide 66 with a viscosity number of 120
(A-5) PA66: Polyamide 66 with a viscosity number of 140
(B) MX44: Melamine cyanurate (available from Mitsubishi Chemical Corporation under the trade name of MX44)
(C-1) WH255: Carboxylic acid amide-based wax (a release agent comprising a polycondensate of stearic acid, ethylenediamine and sebacic acid, available from Kyoeisha Chemical Co., Ltd., under the trade name of WH255)
(C-2) 110P: Polyethylene wax type release agent (available from Mitsui Chemicals, Inc., under the trade name of Hiwax 110P)

### Properties evaluation methods:

### (1) Viscosity number

Measured according to JIS K6933-1999 using 96% sulfuric acid in a concentration of 5 mg/ml at 23°C.

### (2) Flame retardancy

Measured according to UL-94 Standards using the 127 mm x 12.7 mm x 0.8 mm thick test pieces. In rating of flame retardancy in this test, "V-0" indicates a satisfactory level of flame retardancy, with "V-2" inferior to "V-0".

### (3) Glow wire ignition temperature (°C)

Measured according to IEC60695-2-13 Standards on the 3 mm thick test pieces. The test pieces whose ignition temperature was 775°C or higher were indicated by "775°C", those which ignited at 725°C were indicated by "725°C", and those which ignited at 750°C were indicated by "750°C".

### (4) Molding properties

Connectors were molded by an injection molding machine (Type J75ED mfd. by Nippon Steel Works, Ltd.) using an injection mold for molding connectors (32 pieces of connector in one round of molding operation, overall weight of moldings: 35 g, weight of one piece of connector: 0.8 g) at a cycle of 0.4-second injection and 4-second cooling. The molding properties were marked × when the product connectors remained in the mold cavity and ○ when no product connector remained in the mold cavity.

### Examples 1 to 4 and Comparative Examples 1 to 6

### <Preparation of resin compositions>

Polyamide resins and additives were weighed out in the amounts (parts by weight) shown in Table 1, and mixed by a tumbling mixer to obtain mixtures. The obtained mixtures were melted and kneaded by a double-screw extruder (Type TEX30HCT, 30 mmφ, mfd. by Nippon Steel Works, Ltd.) under the conditions of cylinder temperature = 240°C; screw speed = 200 rpm; discharge rate = 15 kg/h in all cases except for Examples 3 and 4, and pelletized. In Examples 3 and 4, the above operation was conducted at a cylinder temperature of 270°C.

### <Making of test pieces and evaluation tests>

Viscosity number of the base polyamide resin was measured with the resin before pelletization. The evaluation tests on molding properties, flame retardancy and glow wire ignition temperature were conducted on the test pieces made by injection molding from the pellets suited for the respective test items. Evaluation results are shown in Table 1. With the composition of Comparative Example 3, its release properties test result is ○ in Table 1, but it was difficult to make its test piece for flame retardancy because of its small thickness (0.8 mm), and silver streaks were formed on the test piece surface to mar its appearance. The test piece was also fragile.

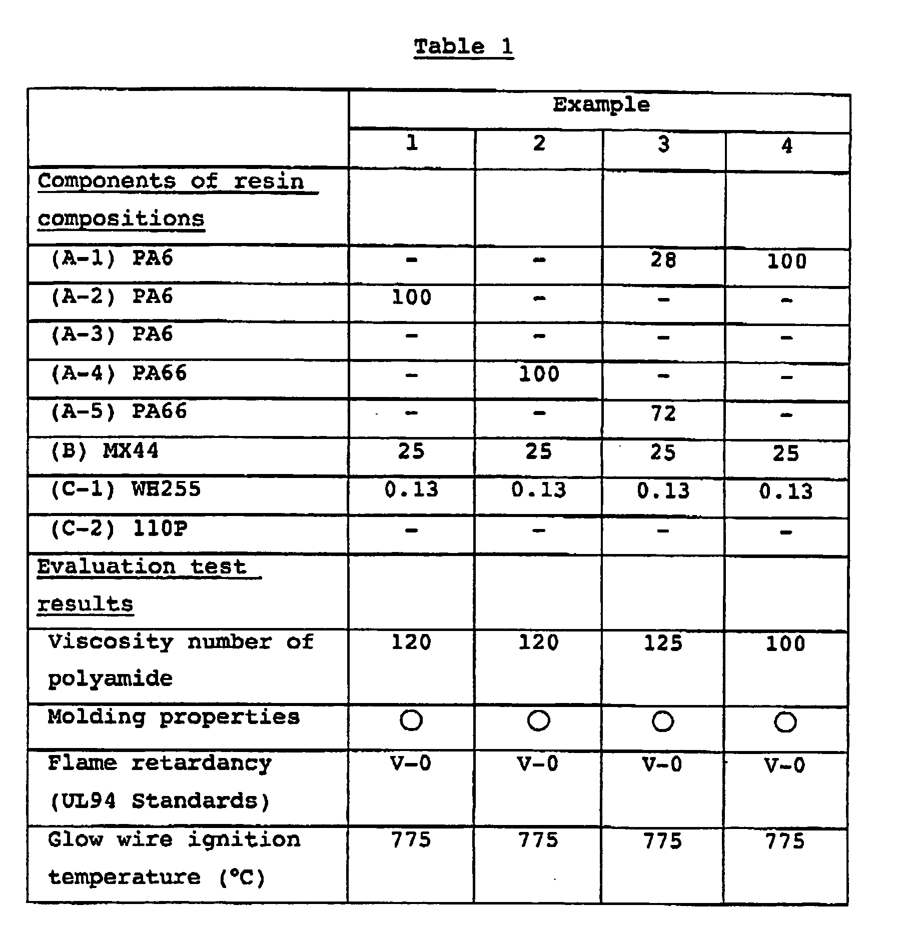

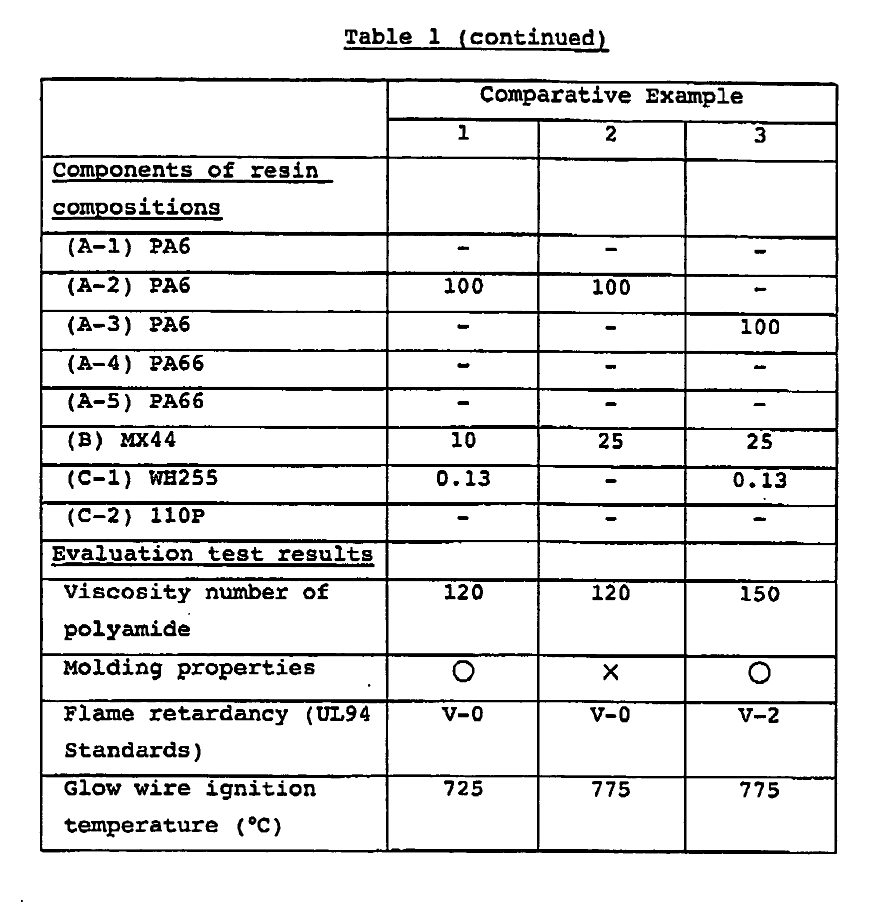

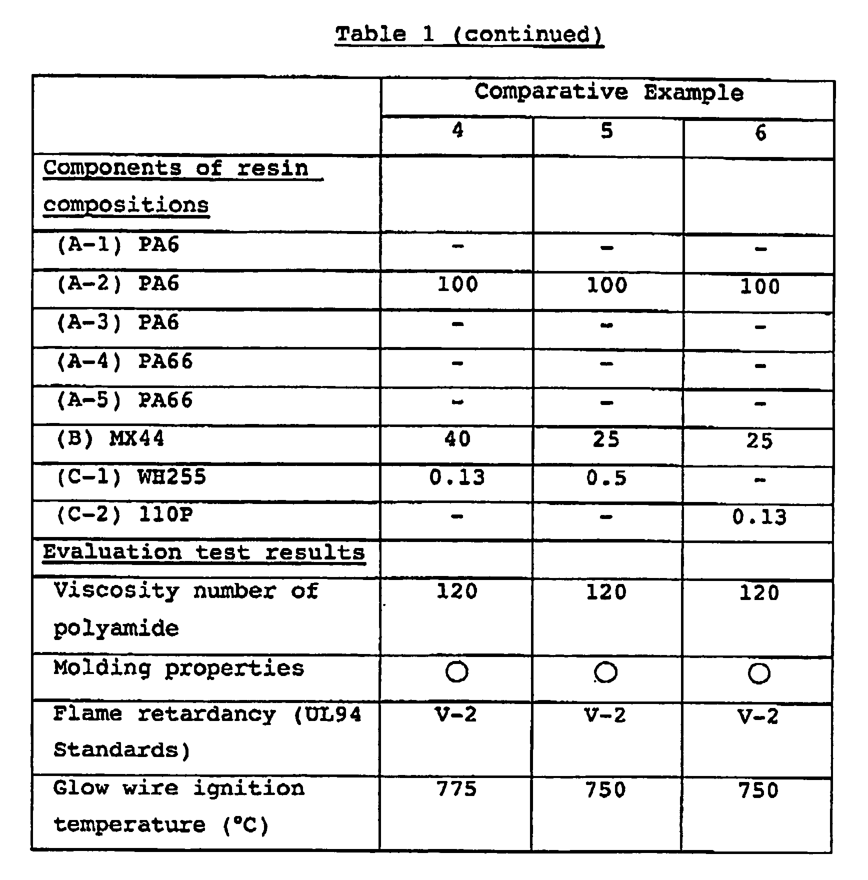

The following facts are evident from Table 1.
1. The flame-retardant polyamide resin composition according to the present invention excels in molding properties. Also, the molded products obtained from this resin composition show excellent flame retardancy of the level of V-0 in the UL-94 Standards, and their glow wire ignition temperature is not lower than 775°C and meet the revised Standards requirements. (See Examples 1 to 3.)
2. In contrast, the composition of Comparative Example 1 in which the content of melamine cyanurate is below the claimed range of the present invention cannot meet the revised Standards requirements concerning glow wire ignition temperature. Also, the composition of Comparative Example 4 in which the content of melamine cyanurate is above the claimed range of the present invention, although meeting the revised glow wire ignition temperature standard requirement of 775°C or above, is poor in its flame retardancy which is ranked V-2 in the UL-94 Standards.
3. The resin composition of Comparative Example 2, in which the content of melamine cyanurate is within the claimed range of the present invention but no carboxylic acid amide-based wax is contained, is poor in molding properties.
4. The resin composition of Comparative Example 3 containing a polyamide resin whose viscosity number is outside the claimed range of the present invention is, as mentioned above, poor in fluidity, making it difficult to mold a test piece with a small thickness, and even if it could be molded, its surface appearance is poor. The connectors according to the present invention are of a structure that allows insertion of a plurality of electric wires or cables into the connectors, and the connectors having the electric wires or cables inserted therein are used for fixing the electric wires or cables in position by, for instance, making use of the system of fits. Therefore, it is not practical by poor molding properties of the composition.
5. The composition of Comparative Example 5 in which the content of the carboxylic acid amide-based wax is above the claimed range of the present invention shows flame retardancy of V-2 in the UL-94 Standards, and its glow wire ignition temperature is 750°C, which is below the passing line of 775°C in the revised Standards.
6. The composition of Comparative Example 6 where a polyethylene wax-based release agent was contained in place of a carboxylic acid amide-based wax ranks V-2 in flame retardancy in the UL-94 Standards, and its glow wire ignition temperature is 750°C, which is below the passing line of 775°C in the revised IEC60695-2-13 Standards.

## Claims

1. A flame-retardant polyamide resin composition comprising 100 parts by weight of a polyamide resin having a viscosity number of 85 to 140, 21 to 35 parts by weight of a triazine-based flame retardant, and 0.01 to 0.3 parts by weight of a carboxylic acid amide-based wax.

2. A flame-retardant polyamide resin composition according to Claim 1, wherein a 3 mm thick test piece made of said resin composition shows glow wire ignition temperature of not lower than 775°C in the IEC60695-2-13 Standards.

3. A flame-retardant polyamide resin composition according to Claim 1 or 2, wherein a 0.8 mm thick test piece made of said resin composition shows flame retardancy of the level of V-0 in the UL-94 Standards.

4. A flame-retardant polyamide resin composition according to any one of Claims 1 to 3, wherein the polyamide resin is at least one type selected from the group consisting of polyamide 6, copolymer polyamide 6/6·6 and polyamide 6 · 6.

5. A flame-retardant polyamide resin composition according to any one of Claims 1 to 3, wherein the triazine-based flame retardant is at least one substance selected from the group consisting of cyanuric acid, isocyanuric acid, melamine, melamine cyanurate and melem cyanurate.

6. A flame-retardant polyamide resin composition according to any one of Claims 1 to 4, wherein the carboxylic acid amide-based wax is a polycondensate of stearic acid, sebacic acid and ethylenediamine.

7. Connectors molded from a flame-retardant polyamide resin composition as defined in any one of Claims 1 to 6.

## Patentansprüche

1. Flammhemmende Polyamidharzzusammensetzung, die 100 Gew.Teile eines Polyamidharzes mit einer Viskositätszahl von 85 bis 140, 21 bis 35 Gew.Teile eines Flammschutzmittels auf Triazinbasis und 0,01 bis 0,3 Gew.Teile eines Wachses auf Carbonsäureamidbasis umfaßt.

2. Flammhemmende Polyamidharzzusammensetzung gemäß Anspruch 1, wobei ein 3 mm dickes Teststück aus besagter Harzzusammensetzung eine Glühdrahtzündtemperatur von nicht weniger als 775°C in den IEC60695-2-13-Standards aufweist.

3. Flammhemmende Polyamidharzzusammensetzung gemäß Anspruch 1 oder 2, worin ein 0,8 mm dickes Teststück aus besagter Harzzusammensetzung eine Flammhemmung der Klasse V-0 in den UL-94-Standards aufweist.

4. Flammhemmende Polyamidharzzusammensetzüng gemäß einem der Ansprüche 1 bis 3, worin das Polyamidharz mindest eine Art ist, die aus der Gruppe ausgewählt ist, die aus Polyamid 6, Copolymer Polyamid 6/6·6 und Polyamid 6·6 besteht.

5. Flammhemmende Polyamidharzzusammensetzung gemäß einem der Ansprüche 1 bis 3, worin das Flammschutzmittel auf Triazinbasis zumindest eine Substanz ist, die aus der Gruppe ausgewählt ist, die aus Cyanursäure, Isocyanursäure, Melamin, Melamincyanurat und Melemcyanurat besteht.

6. Flammhemmende Polyamidharzzusammensetzung gemäß einem der Ansprüche 1 bis 4, worin das Wachs auf Carbonsäureamidbasis ein Polykondensat aus Stearinsäure, Sebacinsäure und Ethylendiamin ist.

7. Anschlußstecker, geformt aus einer flammhemmenden Polyamidharzzusammensetzung wie definiert in einem der Ansprüche 1 bis 6.

## Revendications

1. Composition de résine polyamide ignifuge comprenant 100 parties en poids d'une résine polyamide ayant un indice de viscosité de 85 à 140, de 21 à 35 parties en poids d'un ignifugeant à base de triazine, et de 0,01 à 0,3 parties en poids d'une cire à base d'amide d'un acide carboxylique.

2. Composition de résine polyamide ignifuge selon la revendication 1, dans laquelle un échantillon de 3 mm d'épaisseur fait à partir de ladite composition de résine a une température d'allumage au contact du fil incandescent de pas moins de 775°C dans les normes IEC60695-2-13.

3. Composition de résine polyamide ignifuge selon la revendication 1 ou 2, dans laquelle un échantillon de 0,8 mm d'épaisseur fait à partir de ladite composition de résine a une ininflammabilité de classe V-0 dans les normes UL-94.

4. Composition de résine polyamide ignifuge selon l'une quelconque des revendications 1 à 3, dans laquelle la résine polyamide est au moins un type choisi dans le groupe constitué du polyamide 6, du copolymère polyamide 6/6.6 et polyamide 6.6.

5. Composition de résine polyamide ignifuge selon l'une quelconque des revendications 1 à 3, dans laquelle l'ignifugeant à base de triazine est au moins une substance choisie dans le groupe constitué de l'acide cyanurique, de l'acide isocyanurique, de la mélamine, du cyanurate de mélamine et du cyanurate de mélème.

6. Composition de résine polyamide ignifuge selon l'une quelconque des revendications 1 à 4, dans laquelle la cire à base d'amide d'un acide carboxylique est un polymère de condensation d'acide stéarique, d'acide sébacique et d'éthylènediamine.

7. Connecteurs moulés à partir d'une composition de résine polyamide ignifuge selon l'une quelconque des revendications 1 à 6.
